# EUROPEAN PATENT SPECIFICATION

(11) **EP 4 155 620 B1**
(45) Date of publication and mention of the grant of the patent: **08.01.2025**
(21) Application number: 21198629.4
(22) Date of filing: 23.09.2021
(51) Int. Cl.: F24H 8/00, F24H 9/20, F24H 1/52, F24H 15/31, F24D 19/00

(54) **WATER HEATER AND METHODS TO OPERATE A WATER HEATER**
WASSERERHITZER UND VERFAHREN ZUM BETREIBEN EINES WASSERERHITZERS
CHAUFFE-EAU ET PROCÉDÉS DE FONCTIONNEMENT D'UN CHAUFFE-EAU

(43) Date of publication of application: 29.03.2023
(73) Proprietor: Pittway Sarl, 1180 Rolle (CH)
(72) Inventor: DEPTOLLA, Uwe, 49504 Lotte (DE); MICHALEK, Dusan, 615 00 Brno (CZ)
(74) Representative: Sturm, Christoph

(56) References cited:
- AT-B- 394 769
- DE-B3- 102006 059 582
- DE-U1- 9 112 866

## Description

The invention relates to a water heater. Further on, the invention relates to methods to operate a water heater.

EP 1 063 481 B1 discloses a water heater comprising a gas burner being configured to combust gas if a heat demand is present, further comprising a heat exchanger being configured to heat water using the thermal energy provided with the combustion of the gas, further comprising an input pipe being configured to provide water to be heated to the heat exchanger, further comprising an output pipe being configured to provide water heated by the heat exchanger to the at least one water consumer, and further comprising a connecting pipe, namely a bypass pipe, extending between the input pipe and the output pipe. The gas burner comprises a burner chamber in which the combustion of the gas takes place. The gas burner further comprises a gas armature providing the gas to be combusted to the burner chamber. Both, the burner chamber and the gas armature from part of the gas burner.

US 4 922 861 A, US 7 298 968 B1 and US 10 883 743 B2 disclose other water heaters according to the prior art.

The gas burner of a water heater, especially the gas armature of the gas burner, needs to be calibrated from time to time. For performing a calibration of the gas burner, the gas burner needs to be operated at a defined calibration burner load for a defined calibration time interval. For water heaters according to the prior art, such a calibration of the gas burner can only be executed when a heat demand is present, namely if heated water is requested by at least one water consumer. Depending on the heat demand of the at least one water consumer, the operation of the gas burner at the defined calibration burner load for the defined calibration time interval can lead to a water temperature at the respective water consumer being either too high or too low. This is a significant disadvantage of water heaters known from prior art.

DE 91 12 866.8 discloses a water heater according vto the preamble of claim 1.

AT 394 769 B and DE 10 2006 059 582 B3 disclose other prior art.

Against this background, a novel water heater and methods to operate such a water heater are provided.

The invention provides a water heater according to claim 1.

The water heater comprises a gas burner being configured to combust gas if a heat demand is present, namely if heated water is requested by at least one water consumer.

The water heater further comprises a heat exchanger being configured to heat water using the thermal energy provided with the combustion of the gas, wherein the heat exchanger is a condensing heat exchanger.

The water heater further comprises an input pipe being configured to provide water to be heated to the heat exchanger.

The water heater further comprises an output pipe being configured to provide water heated by the heat exchanger to the at least one water consumer.

The water heater further comprises a siphon or trap being configured to collect condensate resulting at the condensing heat exchanger during operation of the water heater.

The water heater further comprises a first connection pipe and a valve acting together with the first connection pipe, both the first connection pipe and the valve are configured to guide water heated by heat exchanger from the output pipe to the siphon or trap, and/or to guide water not heated by the heat exchanger from the output pipe to the siphon or trap.

The water heater further comprises a second connecting pipe extending between the input pipe and the output pipe.

In a first alternative defined in claim 1, a separate valve acts together with the second connection pipe being configured to guide water from input pipe to the output pipe.

In a second alternative defined in claim 1, the first connecting pipe extends between the second connecting pipe and the siphon or trap. The valve acting together with the first connection pipe is provided by a 3-way-valve connected between the first connecting pipe and the second connecting pipe. Said valve acts also together with the second connection pipe, wherein a first port of the 3-way-valve is connected to the output pipe through a first section of the second connecting pipe, wherein a second port of the 3-way-valve is connected to the input pipe through a second section of the second connecting pipe, and wherein a third port of the 3-way-valve is connected to the siphon or trap through the first connecting pipe. Both, water heated by heat exchanger and water not heated by the heat exchanger can be guided from the output pipe to the siphon or trap through the first connection pipe and the valve acting together with the first connection pipe.

The novel water heater can be operated with the gas burner combusting gas even if there is no heat demand by a water consumer.

Calibrations of the water heater can be executed even if there is no heat demand by a water consumer. The water heated by the water heater during such a calibration can be guided to the siphon or trap.

According to a first embodiment of the first alternative, the valve acting together with the first connection pipe is a 2-way valve positioned within the first connection pipe, wherein a first port of the 2-way-valve is connected to the output pipe through a first section of the first connecting pipe, and wherein a second port of the 2-way-valve is connected to the siphon or trap through a second section of the first connecting pipe. Both, water heated by heat exchanger and water not heated by the heat exchanger can be guided from the output pipe to the siphon or trap through the first connection pipe and the valve acting together with the first connection pipe.

According to a second embodiment of the first alternative, the valve acting together with the first connection pipe is a 3-way valve, wherein a first port of the 3-way-valve is connected to the heat exchanger through a first section of the output pipe, wherein a second port of the 3-way-valve is connected to the at least one water consumer through a second section of the output pipe, and wherein a third port of the 3-way-valve is connected to the siphon or trap through the first connecting pipe. Both, water heated by heat exchanger and water not heated by the heat exchanger can be guided from the output pipe to the siphon or trap through the first connection pipe and the valve acting together with the first connection pipe.

Further on, the invention provides methods to operate a water heater according to claims 5, 7, 9, 11 and 12.

Preferred developments of the invention are provided by the dependent claims and the description which follows. Exemplary embodiments are explained in more detail on the basis of the drawing, in which:
- Figure 1: shows a first water heater according to a comparative example,
- Figure 2: shows a second water heater according to the present invention,
- Figure 3: shows a third water heater according to a comparative example,
- Figure 4: shows a fourth water heater according to the present invention,
- Figure 5: shows a fifth water heater according to the present invention.

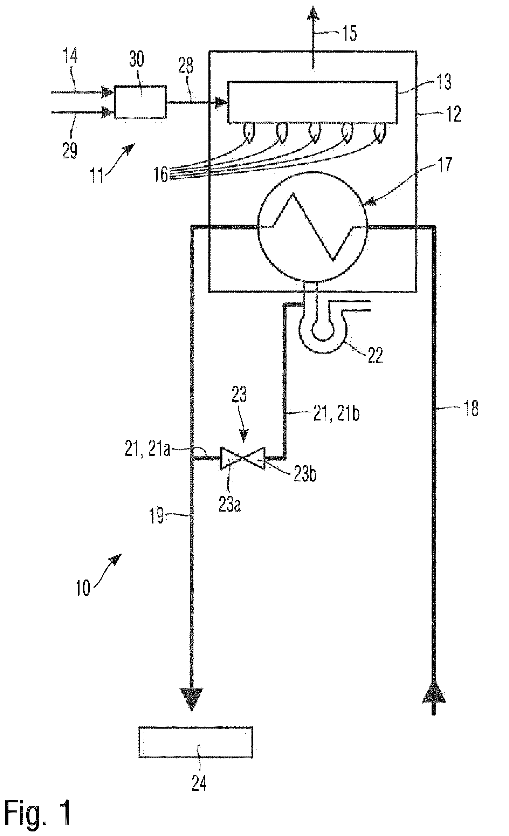

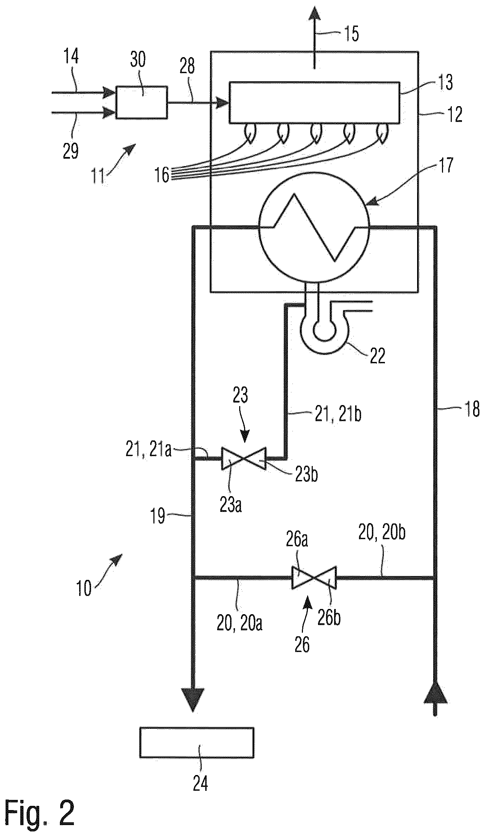

Figures 1 and 2 each show a water heater 10.

The water heater 10 comprises a gas burner 11 being configured to combust a gas if a heat demand is present, namely if heated water is requested by at least one water consumer 24.

The gas burner comprises 11 a burner chamber 12. A burner rod 13 of the gas burner 11 is positioned within the burner chamber 11.

Gas 14 is provided to the burner rod 13 for combusting the gas 14 within the burner chamber 12. The gas 14 is preferably provided as a gas/air mixture 28. The combustion of the gas 14 of gas/air mixture 28 results into flames 16 and exhaust gas 15. The exhaust gas 15 emerges from the burner chamber 12 through a chimney.

As mentioned above, the gas 14 is preferably provided as a gas/air mixture 28. Such a gas/air mixture 28 is usually provided by a gas armature 30 of the gas burner 11. Such gas armatures 30 are well known. Such a gas armature 30 usually comprises a fan (not shown) proving a flow of air 29, a gas valve or gas modulator (not shown) providing a flow of the gas 14 and a mixing unit (not shown) mixing the air flow with the gas flow. The mixing ratio of gas 14 and air 29 within the gas/air mixture 28 is usually kept at a defined value over the entire modulation rage of the gas burner 11 such that at any burner load of the gas burner 11 the mixing ratio of the gas/air mixture 28 is kept at the defined value.

The water heater 10 further comprises a heat exchanger 17 being configured to heat water using the thermal energy provided with the combustion of the gas 14. The heat exchanger 17 is positioned inside the burner chamber 12. The heat exchanger 17 is a condensing heat exchanger.

The water heater 10 further comprises an input pipe 18 being configured to provide unheated water, namely water to be heated by the heat exchanger 17, to the heat exchanger 17. The water heater 10 further comprises an output pipe 19 being configured to provide water heated by the heat exchanger 17 to the at least one water consumer 24. The water heater 10 further comprises a siphon or trap 22 being configured to collect condensate resulting at the condensing heat exchanger 17 during operation of the water heater 10.

The water heater 10 further comprises a first connecting pipe 21 and a valve 23 acting together with the first connection pipe 21. Both the first connection pipe 21 and the valve 23 are configured to guide water heated by heat exchanger 17 from the output pipe 19 to the siphon or trap 22, and to guide water not heated by the heat exchanger 17 from the output pipe 19 to the siphon or trap 22.

In Figure 1 and 2, the first connection pipe 21 extends between the output pipe 19 and the siphon or trap 22. The valve 23 acting together with the first connection pipe 21 is a 2-way valve positioned within the first connection pipe 21, wherein a first port 23a of the 2-way-valve is connected to the output pipe 19 through a first section 21a of the first connecting pipe 21, and wherein a second port 23b of the 2-way-valve is connected to the siphon or trap 22 through a second section 21b of the first connecting pipe 21. Figure 2 according to a first embodiment of the invention shows a modification of water heater 10 of Figure 1. In Figure 2 the water heater 10 comprises further a second connecting pipe 20 extending between the input pipe 18 and the output pipe 19, and a separate valve 26 acting together with the second connection pipe 20 being configured to guide water from input pipe 18 to the output pipe 19. A first section 20a of the second connecting pipe 20 extends between the output pipe 19 and the separate valve 26. A second section 20a of the second connecting pipe 20 extends between the input pipe 18 and the separate valve 26. All other details of the water heater of Figure 2 are identical to the water heater of Figure 1. The second connecting pipe 20 may also be called bypass pipe.

If a heat demand is present at the water heater 10 of Figures 1 and 2, namely if heated water is requested by the at least one water consumer 24, the input pipe 18 provides water to the heat exchanger 17, said water becomes heated by the heat exchanger 17 when flowing through the same using the thermal energy resulting from the combustion of the gas 14 by the gas burner 11, and the water heated by the heat exchanger 17 is provided to the respective water consumer 24. In this situation the valve 23 is closed. In Figure 2 the valve 26 may be opened or closed in this situation. If the valve 26 is closed in this situation, only water heated by the heat exchanger 17 is provided to the respective water consumer 24. If the valve 26 is opened in this situation, the water heated by the heat exchanger 17 becomes mixed with unheated water bypassing the heat exchanger 17 and said mixture is provided to the respective water consumer 24. If a heat demand is not present at the water heater 10 of Figures 1 and 2, namely if heated water is not requested by the at least one water consumer 24, the gas burner 11 may be active and may combust gas 14 or may inactive and may not combust gas 14.

If a heat demand is not present and if the gas burner 11 of the water heater 10 of Figures 1 and 2 is combusting gas 14, water heated by the heat exchanger 17 can be provided to the siphon or trap 22 from the output pipe 19 through the first connecting pipe 21 and through the valve 23.

If a heat demand is not present and if the gas burner 11 of the water heater 10 of Figures 1 and 2 is not combusting gas 14, water not being heated by the heat exchanger 17 but flowing through the same can be provided to the siphon or trap 22 from the output pipe 19 through the first connecting pipe 21 and through the valve 23.

So, heated water as well as unheated water can be provided to the siphon or trap 22 without any water consumption at a water consumer 24.

If no heat demand is present, namely if heated water is not requested by the at least one water consumer 24, for a calibration of the gas burner 11 of the water heater 10 of Figures 1 and 2, the water heater 10 is operated as follows: The gas burner 11 is operated at a defined calibration burner load for a defined calibration time interval and the water heated by the heat exchanger 17 during the calibration is provided by the valve 23 to the siphon or trap 22. During the calibration, the heated water is provided by the valve 23 to the siphon or trap 22 from the output pipe 19, namely in such a way that the heated water flows from the output pipe 19 through the first section 21a of the first connecting pipe 21, through the valve 23 and through the second section 21b of the first connecting pipe 21 to the siphon or trap 22.

If no heat demand is present, namely if heated water is not requested by the at least one water consumer 24, for a filling the siphon or trap 22 directly after installation of the water heater 10 of Figures 1 and 2, the water heater 10 is operated as follows: Unheated water or heated water is provided by the valve 23 to the siphon or trap 22. Preferably, the unheated water or the heated water is provided by the valve 23 to the siphon or trap 22 from the output pipe 19.

To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the valve 23 to the siphon or trap 22 from the output pipe 19, namely in such a way that the water flows from the output pipe 19 through the first section 21a of the first connecting pipe 21, through the valve 23 and through the second section 21b of the first connecting pipe 21 to the siphon or trap 22.

If no heat demand is present, namely if heated water is not requested by the at least one water consumer 24, for a cleaning the siphon or trap 22 the water heater 10 of Figures 1 and 2 is operated as follows: Unheated water or heated water is provided by the valve 23 to the siphon or trap 22. Unheated water or heated water is provided by the valve 23 to the siphon or trap 22. Preferably, the unheated water or the heated water is provided by the valve 23 to the siphon or trap 22 from the output pipe 19.

To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the valve 23 to the siphon or trap 22 from the output pipe 19, namely in such a way that the water flows from the output pipe 19 through the first section 21a of the first connecting pipe 21, through the valve 23 and through the second section 21b of the first connecting pipe 21 to the siphon or trap 22.

If no heat demand is present, namely if heated water is not requested by the at least one water consumer 24, for a descaling of the heat exchanger 17 the water heater 10 of Figures 1 and 2 is operated as follows. The following steps i) and ii) are alternately executed. Step i): Combust gas with the gas burner 11 at a defined burner load for a defined first time interval and provide the heated water to the siphon or trap 22. Step ii): Stop combustion of gas within the gas burner 11 for a defined second time interval and provide the unheated water to the siphon or trap 22.

If no heat demand is present, namely if heated water is not requested by the at least one water consumer 24, for a descaling of the heat exchanger 17 the water heater 10 of Figures 1 and 2 is alternatively operated as follows. The following steps i) and ii) are alternately executed. Step i): Combust gas with the gas burner 11 at a defined first burner load for a defined first time interval and provide the heated water to the siphon or trap 22. Step ii) combust gas with the gas burner 11 at a defined second burner load for a defined second time interval and provide the heated water to the siphon or trap 22, wherein the first burner load is relatively low compared to the second burner load. The first burner load may be a minimum burner load and the second burner load may be a maximum burner load.

For the descaling of the heat exchanger 17 of the water heater 10, during the first time interval and during the second time interval the water is provided from the output pipe 19 to the siphon or trap 22 through the valve 23, namely in such a way that the water flows from the output pipe 19 through the first section 21a of the first connecting pipe 21, through the valve 23 and through the second section 21b of the first connecting pipe 21 to the siphon or trap 22.

If in Figures 1 and 2 water flows from output pipe 19 to the siphon or trap 22, the valve 23 is opened.

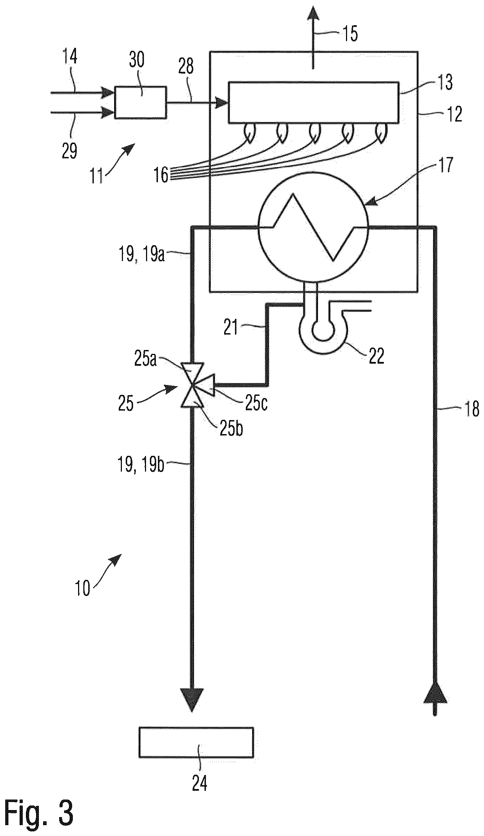

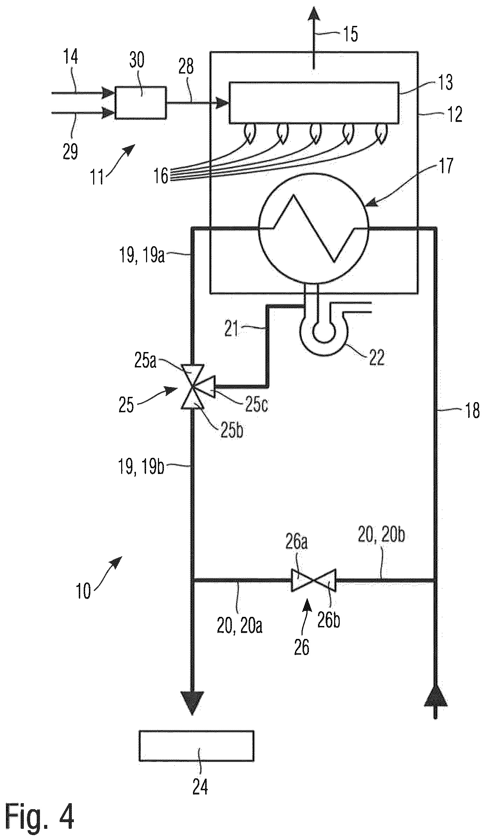

Figures 3 and 4 both show a water heater 10. The comparative water heater of Figure 3 differs from the comparative water heater of Figure 1 and the water heater of Figure 4 according to a second embodiment of the invention differs from the water heater of Figure 2 according the first embodiment of the invention merely by the design of the respective valve 23, 25 acting together with first connection pipe 21. While in Figures 1 and 2 said valve 23 is provided by a 2-way-valve, in Figures 3 and 4 said valve 25 is provided by a 3-way-valve. In Figures 3 and 4, a first port 25a of the 3-way-valve is connected to the heat exchanger 17 through a first section 19a of the output pipe 19, wherein a second port 25b of the 3-way-valve is connected to the at least one water consumer 24 through a second section 19b of the output pipe 19, and wherein a third port 25c of the 3-way-valve is connected to the siphon or trap 22 through the first connecting pipe 21.

Figure 4 differs from Figure 3 merely by the second connecting pipe 20 extending between the input pipe 18 and the output pipe 19, and by the separate valve 26 acting together with second connection pipe 20 being configured to guide water from input pipe 18 to the output pipe 19.

In Figures 3 and 4 as well as in Figures 1 and 2 both the first connection pipe 21 and the respective valve 23, 25 are configured to guide water heated by heat exchanger 17 from the output pipe 19 to the siphon or trap 22, and to guide water not heated by the heat exchanger 17 from the output pipe 19 to the siphon or trap 22. The second connecting pipe 20 may also be called bypass pipe.

If a heat demand is present at the water heater 10 of Figures 3 and 4, namely if heated water is requested by the at least one water consumer 24, the input pipe 18 provides water to the heat exchanger 17, said water becomes heated by the heat exchanger 17 when flowing through the same using the thermal energy resulting from the combustion of the gas 14 by the gas burner 11, and the water heated by the heat exchanger 17 is provided to the respective water consumer 24. In this situation the ports 25a, 25b of the valve 25 are opened and the port 25c of the valve 25 is closed. In Figure 4 the valve 26 may be opened or closed in this situation. If the valve 26 is closed in this situation, only water heated by the heat exchanger 17 is provided to the respective water consumer 24. If the valve 26 is opened in this situation, the water heated by the heat exchanger 17 becomes mixed with unheated water bypassing the heat exchanger 17 and said mixture is provided to the respective water consumer 24. If a heat demand is not present at the water heater 10 of Figures 3 and 4, namely if heated water is not requested by the at least one water consumer 24, the gas burner 11 may be active and may combust gas 14 or may inactive and may not combust gas 14.

If a heat demand is not present and if the gas burner 11 of the water heater 10 of Figures 3 and 4 is combusting gas 14, water heated by the heat exchanger 17 can be provided to the siphon or trap 22 from the output pipe 19 through the first connecting pipe 21 and through the valve 25.

If a heat demand is not present and if the gas burner 11 of the water heater 10 of Figures 3 and 4 is not combusting gas 14, water not being heated by the heat exchanger 17 but flowing through the same can be provided to the siphon or trap 22 from the output pipe 19 through the first connecting pipe 21 and through the valve 25. So, heated water as well as unheated water can be provided to the siphon or trap 22 without any water consumption at a water consumer 24.

If no heat demand is present, namely if heated water is not requested by the at least one water consumer 24, for a calibration of the gas burner 11 of the water heater 10 of Figures 3 and 4, the water heater 10 is operated as follows: The gas burner 11 is operated at a defined calibration burner load for a defined calibration time interval and the water heated by the heat exchanger 17 during the calibration is provided by the valve 25 to the siphon or trap 22. In this situation the ports 25a, 25c of the valve 25 are opened and the port 25b of the valve 25 is closed. During the calibration, the heated water is provided by the valve 25 to the siphon or trap 22 from the output pipe 19, namely in such a way that the heated water flows from the first section 19a of the output pipe 19 through the valve 25 and through the first connecting pipe 21 to the siphon or trap 22.

If no heat demand is present, namely if heated water is not requested by the at least one water consumer 24, for a filling the siphon or trap 22 directly after installation of the water heater 10 of Figures 3 and 4, the water heater 10 is operated as follows: Unheated water or heated water is provided by the valve 25 to the siphon or trap 22. Preferably, the unheated water or the heated water is provided by the valve 25 to the siphon or trap 22 from the output pipe 19. To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the valve 25 to the siphon or trap 22 from the output pipe 19, namely in such a way that the water flows from the first section 19a of the output pipe 19 through the valve 25 and through the first connecting pipe 21 to the siphon or trap 22.

If no heat demand is present, namely if heated water is not requested by the at least one water consumer 24, for a cleaning the siphon or trap 22 the water heater 10 of Figures 3 and 4 is operated as follows: Unheated water or heated water is provided by the valve 25 to the siphon or trap 22. Unheated water or heated water is provided by the valve 25 to the siphon or trap 22. Preferably, the unheated water or the heated water is provided by the valve 25 to the siphon or trap 22 from the output pipe 19. To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the valve 25 to the siphon or trap 22 from the output pipe 19, namely in such a way that the water flows from the first section 19a of the output pipe 19 through the valve 25 and through the first connecting pipe 21 to the siphon or trap 22.

If no heat demand is present, namely if heated water is not requested by the at least one water consumer 24, for a descaling of the heat exchanger 17 the water heater 10 of Figures 3 and 4 is operated as follows. The following steps i) and ii) are alternately executed. Step i): Combust gas with the gas burner 11 at a defined burner load for a defined first time interval and provide the heated water to the siphon or trap 22. Step ii): Stop combustion of gas within the gas burner 11 for a defined second time interval and provide the unheated water to the siphon or trap 22.

If no heat demand is present, namely if heated water is not requested by the at least one water consumer 24, for a descaling of the heat exchanger 17 the water heater 10 of Figures 3 and 4 is alternatively operated as follows. The following steps i) and ii) are alternately executed. Step i): Combust gas with the gas burner 11 at a defined first burner load for a defined first time interval and provide the heated water to the siphon or trap 22. Step ii) combust gas with the gas burner 11 at a defined second burner load for a defined second time interval and provide the heated water to the siphon or trap 22, wherein the first burner load is relatively low compared to the second burner load. The first burner load may be a minimum burner load and the second burner load may be a maximum burner load.

For the descaling of the heat exchanger 17 of the water heater 10, during the first time interval and during the second time interval the water is provided from the output pipe 19 to the siphon or trap 22 through the valve 25, namely in such a way that the water flows from the first section 19a of the output pipe 19 through the valve 25 and through the first connecting pipe 21 to the siphon or trap 22.

If in Figures 3 and 4 water flows from output pipe 19 to the siphon or trap 22, the ports 25a, 25c of the valve 25 are opened and the port 25b of the valve 25 is closed.

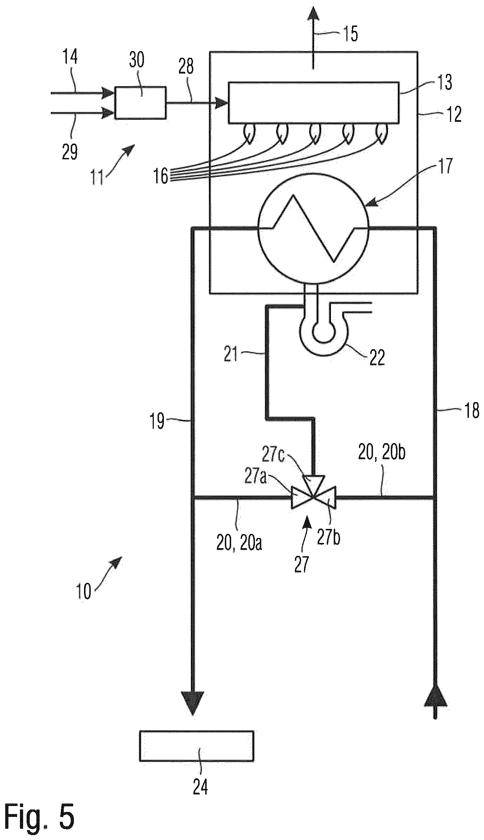

Figures 5 both shows a water heater 10 according to a third embodiment of the present invention.

The water heater 10 of Figure 5 mandatorily comprises the second connecting pipe 20 extending between the input pipe 18 and the output pipe 19. The second connecting pipe 20 may also be called bypass pipe. In Figure 5, the first connecting pipe 21 extends between the second connecting pipe 20 and the siphon or trap 22. The water heater of Figure 5 further comprises a valve 27 connected between the first connecting pipe 21 and the second connecting pipe 22. Said valve 27 is configured to guide water heated by heat exchanger 17 from the output pipe 19 to the siphon or trap 22, and to guide water unheated by the heat exchanger 17 but flowing through the same from the output pipe 19 to the siphon or trap 22. This can be done even if no heat demand is present, namely if heated water is not requested by the at least one water consumer 24. Said valve 27 is also configured to guide unheated water bypassing the heat exchanger 18 from the input pipe 18 to the siphon or trap 22.

The valve 27 of Figure 5 is a 3-way-valve. A first port 27a of the 3-way-valve 27 is connected to output pipe 19 through a first section 20a of the second connecting pipe 20. A second port 27b of the 3-way-valve 27 is connected to input pipe 18 through a second section 20b of the second connecting pipe 20. A third port 27c of the 3-way-valve 27 is connected to the siphon or trap 22 through the first connecting pipe 21.

If a heat demand is present at the water heater of Figure 5, namely if heated water is requested by the at least one water consumer 24, the input pipe 18 provides water to the heat exchanger 17, said water becomes heated by the heat exchanger 17 when flowing through the same using the thermal energy resulting from the combustion of the gas 14 by the gas burner 11, and the water heated by the heat exchanger 17 is provided to the respective water consumer 24. In this situation the valve 27 may be closed or opened.

If the valve 27 is closed in this situation, only water heated by the heat exchanger 17 is provided to the respective water consumer 24. If the valve 27 is opened in this situation, the water heated by the heat exchanger 17 becomes mixed with unheated water bypassing the heat exchanger and said mixture is provided to the respective water consumer 24.

If a heat demand is not present at the water heater of Figure 5, namely if heated water is not requested by the at least one water consumer 24, the gas burner 11 may be active and may combust gas 14 or may inactive and may not combust gas 14.

If a heat demand is not present and if the gas burner 11 of the water heater of Figure 5 is combusting gas 14, water heated by the heat exchanger 17 can be provided to the siphon or trap 22 from the output pipe 19 through the first section 20a of first connecting pipe 20, through the 3-way valve 27 and through the second connecting pipe 21.

If a heat demand is not present and if the gas burner 11 of the water heater of Figure 5 is not combusting gas 14, water not being heated by the heat exchanger 17 but flowing through the same can be provided to the siphon or trap 22 from the output pipe 19 through the first section 20a of first connecting pipe 20, through the 3-way valve 27 and through the second connecting pipe 21.

So, heated water as well as unheated water can be provided to the siphon or trap 22 without any water consumption at a water consumer 24.

If no heat demand is present, namely if heated water is not requested by the at least one water consumer 24, for a calibration of the gas burner 11 of the water heater 10 of Figure 5 the water heater 10 is operated as follows: The gas burner 11 is operated at a defined calibration burner load for a defined calibration time interval and the water heated by the heat exchanger 17 during the calibration is provided by the valve 27 to the siphon or trap 22. During the calibration, the heated water is provided by the valve 27 to the siphon or trap 22 from the output pipe 19, namely in such a way that the heater water flows from the output pipe 19 through the first section 20a of the first connecting pipe 20, through the valve 27 and through the second connection pipe 21 to the siphon or trap 22.

If no heat demand is present, namely if heated water is not requested by the at least one water consumer 24, for a filling the siphon or trap 22 directly after installation of the water heater 10 of Figure 5, the water heater 10 is operated as follows: Unheated water or heated water is provided by the valve 27 to the siphon or trap 22. Preferably, the unheated water or the heated water is provided by the valve 27 to the siphon or trap 22 from the output pipe 19. To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the valve 27 to the siphon or trap 22 from the output pipe 19, namely in such a way that the water flows from the output pipe 19 through the first section 20a of the first connecting pipe 20, through the valve 27 and through the second connection pipe 21 to the siphon or trap 22.

If no heat demand is present, namely if heated water is not requested by the at least one water consumer 24, for a cleaning the siphon or trap 22 the water heater 10 of Figure 5 is operated as follows: Unheated water or heated water is provided by the valve to the siphon or trap 22. Unheated water or heated water is provided by the valve 27 to the siphon or trap 22. Preferably, the unheated water or the heated water is provided by the valve 27 to the siphon or trap 22 from the output pipe 19. To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the valve 27 to the siphon or trap 22 from the output pipe 19, namely in such a way that the water flows from the output pipe 19 through the first section 20a of the first connecting pipe 20, through the valve 27 and through the second connection pipe 21 to the siphon or trap 22.

If no heat demand is present, namely if heated water is not requested by the at least one water consumer 24, for a descaling of the heat exchanger 17 the water heater 10 of Figure 5 is operated as follows. The following steps i) and ii) are alternately executed. Step i): Combust gas with the gas burner 11 at a defined burner load for a defined first time interval and provide the heated water to the siphon or trap 22. Step ii): Stop combustion of gas within the gas burner 11 for a defined second time interval and provide the unheated water to the siphon or trap 22.

If no heat demand is present, namely if heated water is not re-quested by the at least one water consumer 24, for a descaling of the heat exchanger 17 the water heater 10 of Figure 5 is alternatively operated as follows. The following steps i) and ii) are alternately executed. Step i): Combust gas with the gas burner 11 at a defined first burner load for a defined first time interval and provide the heated water to the siphon or trap 22. Step ii) combust gas with the gas burner 11 at a defined second burner load for a defined second time interval and provide the heated water to the siphon or trap 22, wherein the first burner load is relatively low compared to the second burner load. The first burner load may be a minimum burner load and the second burner load may be a maximum burner load.

For the descaling of the heat exchanger 17 of the water heater 10 of Figure 5, during the first time interval and during the second time interval the water is provided from the output pipe 19 to the siphon or trap 22 through the valve 27, namely in such a way that the water flows from the output pipe 19 through the first section 20a of the first connecting pipe 20, through the valve 27 and through the second connection pipe 21 to the siphon or trap 22.

If in Figure 5 water flows from output pipe 19 through the first section 20a of the first connecting pipe 20, through the valve 27 and through the second connection pipe 21 to the siphon or trap 22, the valve 27 is in a status in which the first valve port 27a and third valve port valve 27c are unblocked or opened while the second valve port 27b is blocked or closed.

### List of reference signs

- 10: water heater
- 11: gas burner
- 12: combustion camber
- 13: burner rod
- 14: gas or gas/air mixture
- 15: exhaust gas
- 16: flame
- 17: heat exchanger
- 18: input pipe
- 19: output pipe
- 19a: first section
- 19b: second section
- 20: connecting pipe
- 20a: first section
- 20b: second section
- 21: connecting pipe
- 21a: first section
- 21b: second section
- 22: siphon or trap
- 23: valve
- 23a: first valve port
- 23b: second valve port
- 24: water consumer
- 25: valve
- 25a: first valve port
- 25b: second valve port
- 25c: third valve port
- 26: valve
- 26a: first valve port
- 26b: second valve port
- 27: valve
- 27a: first valve port
- 27b: second valve port
- 27c: third valve port
- 28: gas/air mixture
- 29: air
- 30: gas armature

## Claims

1. Water heater (10) comprising:
a gas burner (11) being configured to combust gas if a heat demand is present, namely if heated water is requested by at least one water consumer (24),
a heat exchanger (17) being configured to heat water using the thermal energy provided with the combustion of the gas, wherein the heat exchanger (17) is a condensing heat exchanger,
an input pipe (18) being configured to provide water to be heated to the heat exchanger (17),
an output pipe (19) being configured to provide water heated by the heat exchanger (17) to the at least one water consumer (24),
a siphon or trap (22) being configured to collect condensate resulting at the condensing heat exchanger (17) during operation of the water heater (10),
a first connection pipe (21) and a valve (23, 25, 27) acting together with the first connection pipe (21), both the first connection pipe (21) and the valve (23, 25, 27) being configured to
guide water heated by heat exchanger (17) from the output pipe (19) to the siphon or trap (22), and/or
guide water not heated by the heat exchanger (17) from the output pipe (19) to the siphon or trap (22),
**characterized by**
a second connecting pipe (20) extending between the input pipe (18) and the output pipe (19),
wherein in a first alternative a separate valve (26) acts together with the second connection pipe (20) being configured to guide water from input pipe (18) to the output pipe (19), or
wherein in a second alternative the first connecting pipe (21) extends between the second connecting pipe (20) and the siphon or trap (22), the valve (27) acting together with the first connection pipe (21) is provided by a 3-way-valve, is connected between the first connecting pipe (21) and the second connecting pipe (20) and acts also together with the second connection pipe (20), a first port (27a) of the 3-way-valve is connected to the output pipe (19) through a first section (20a) of the second connecting pipe (20), a second port (27b) of the 3-way-valve is connected to the input pipe (18) through a second section (10b) of the second connecting pipe (20), and a third port (27c) of the 3-way-valve is connected to the siphon or trap (22) through the first connecting pipe (21).

2. Water heater (10) of claim 1, **characterized in that**
in the first alternative the valve (23) acting together with first connection pipe (21) is a 2-way valve positioned within the first connection pipe (21),
wherein a first port (23a) of the 2-way-valve is connected to the output pipe (19) through a first section (21a) of the first connecting pipe (21),
wherein a second port (23b) of the 2-way-valve is connected to the siphon or trap (22) through a second section (21b) of the first connecting pipe (21).

3. Water heater (10) of claim 1, **characterized in that**
in the first alternative the valve (25) acting together with first connection pipe (21) is a 3-way valve,
wherein a first port (25a) of the 3-way-valve is connected to the heat exchanger (17) through a first section (19a) of the output pipe (19),
wherein a second port (25b) of the 3-way-valve is connected to the at least one water consumer (24) through a second section (19b) of the output pipe (19),
wherein a third port (25c) of the 3-way-valve is connected to the siphon or trap (22) through the first connecting pipe (21).

4. Water heater of one of claims 1 to 3, **characterized in that**
the gas burner (11) comprises a burner chamber (12),
the heat exchanger (17) is positioned inside the burner chamber (12) of the gas burner (11),
the siphon or trap (22) is positioned outside of the burner chamber (12) of the gas burner (11).

5. Method to operate the water heater of one of claims 1 to 4, **characterized in that**
if no heat demand is present, namely if heated water is not requested by the at least one water consumer (24), for a calibration of the gas burner (11) of the water heater (10) the gas burner (11) is operated at a defined burner load for a defined time interval and the water heated by the heat exchanger (17) during the calibration is provided to the siphon or trap (22).

6. Method of claim 5, **characterized in that**
the water heated during the calibration is provided from the output pipe (19) to the siphon or trap (22) through the valve (23, 25, 27).

7. Method to operate the water heater of one of claims 1 to 4, preferably according to claim 5 or 6, **characterized in that**
if no heat demand is present, namely if heated water is not requested by the at least one water consumer (24), for a filling of the siphon or trap (22) directly after installation of the water heater (10) unheated water or heated water is provided to the siphon or trap (22).

8. Method of claim 7, **characterized in that**
the unheated water or the heated water is provided from the output pipe (19) to the siphon or trap (22) through the valve (23, 25, 27).

9. Method to operate the water heater of one of claims 1 to 6, preferably according to one of claims 5 to 8, **characterized in that**
if no heat demand is present, namely if heated water is not requested by the at least one water consumer (24), for a cleaning of the siphon or trap (22) unheated water or heated water is provided to the siphon or trap (22).

10. Method of claim 9, **characterized in that**
the unheated water or the heated water is provided from the output pipe (19) to the siphon or trap (22) through the valve (23, 25, 27).

11. Method to operate the water heater of one of claims 1 to 4, preferably according to one of claims 5 to 10, **characterized in that**
if no heat demand is present, namely if heated water is not requested by the at least one water consumer (24), for a descaling of the heat exchanger (17) the following steps are alternately executed:
i) combust gas with the gas burner (11) at a defined burner load for a defined first time interval and provide the heated water to the siphon or trap (22),
ii) stop combustion of gas within the gas burner (11) for a defined second time interval and provide the unheated water to the siphon or trap (22).

12. Method to operate the water heater of one of claims 1 to 4, preferably according to one of claims 5 to 10, **characterized in that**
if no heat demand is present, namely if heated water is not requested by the at least one water consumer (24), for a descaling of the heat exchanger (17) the following steps are alternately executed:
i) combust gas with the gas burner (11) at a defined first burner load, preferably at a minimum burner load, for a defined first time interval and provide the heated water to the siphon or trap (22),
ii) combust gas with the gas burner (11) at a defined second burner load, preferably at a maximum burner load, for a defined second time interval and provide the heated water to the siphon or trap (22), wherein the first burner load is relatively low compared to the second burner load.

13. Method of claim 11 or 12, **characterized in that**
the during the first time interval and during the second time interval the water is provided from the output pipe (19) to the siphon or trap (22) through the valve (23).

## Patentansprüche

1. Wasserheizer (10), der Folgendes aufweist:
einen Gasbrenner (11), der dazu ausgestaltet ist, Gas zu verbrennen, wenn ein Wärmebedarf vorliegt, nämlich wenn von zumindest einem Wasserverbraucher (24) erwärmtes Wasser angefordert wird,
einen Wärmetauscher (17), der dazu ausgestaltet ist, Wasser unter Verwendung der mit der Verbrennung des Gases bereitgestellten thermischen Energie zu erwärmen, wobei der Wärmetauscher (17) ein Kondensationswärmetauscher ist,
eine Zuleitung (18), die dazu ausgestaltet ist, zu erwärmendes Wasser zum Wärmetauscher (17) bereitzustellen,
eine Ableitung (19), die dazu ausgestaltet ist, vom Wärmetauscher (17) erwärmtes Wasser zum zumindest einen Wasserverbraucher (24) bereitzustellen,
einen Siphon oder Kondensatableiter (22), der dazu ausgestaltet ist, während eines Betriebs des Wasserheizers (10) am Kondensationswärmetauscher (17) entstehendes Kondensat aufzufangen,
eine erste Verbindungsleitung (21) und ein mit der ersten Verbindungsleitung (21) zusammenwirkendes Ventil (23, 25, 27), wobei die erste Verbindungsleitung (21) und das Ventil (23, 25, 27) dazu ausgestaltet sind,
vom Wärmetauscher (17) erwärmtes Wasser von der Ableitung (19) zum Siphon oder Kondensatableiter (22) zu leiten, und/oder
vom Wärmetauscher (17) nicht erwärmtes Wasser von der Ableitung (19) zum Siphon oder Kondensatableiter (22) zu leiten,
**gekennzeichnet durch**
eine zweite Verbindungsleitung (20), die sich zwischen der Zuleitung (18) und der Ableitung (19) erstreckt,
wobei bei einer ersten Alternative ein separates Ventil (26) mit der zweiten Verbindungsleitung (20) zusammenwirkt, das dazu ausgestaltet ist, Wasser von der Zuleitung (18) zur Ableitung (19) zu leiten, oder
wobei bei einer zweiten Alternative sich die erste Verbindungsleitung (21) zwischen der zweiten Verbindungsleitung (20) und dem Siphon oder Kondensatableiter (22) erstreckt, das mit der ersten Verbindungsleitung (21) zusammenwirkende Ventil (27) durch ein 3-Wege-Ventil bereitgestellt ist, zwischen der ersten Verbindungsleitung (21) und der zweiten Verbindungsleitung (20) verbunden ist und auch mit der zweiten Verbindungsleitung (20) zusammenwirkt, ein erster Anschluss (27a) des 3-Wege-Ventils über einen ersten Abschnitt (20a) der zweiten Verbindungsleitung (20) mit der Ableitung (19) verbunden ist, ein zweiter Anschluss (27b) des 3-Wege-Ventils über einen zweiten Abschnitt (10b) der zweiten Verbindungsleitung (20) mit der Zuleitung (18) verbunden ist und ein dritter Anschluss (27c) des 3-Wege-Ventils über die erste Verbindungsleitung (21) mit dem Siphon oder Kondensatableiter (22) verbunden ist.

2. Wasserheizer (10) nach Anspruch 1, **dadurch gekennzeichnet, dass**
bei der ersten Alternative das mit der ersten Verbindungsleitung (21) zusammenwirkende Ventil (23) ein 2-Wege-Ventil ist, das in der ersten Verbindungsleitung (21) positioniert ist,
wobei ein erster Anschluss (23a) des 2-Wege-Ventils über einen ersten Abschnitt (21a) der ersten Verbindungsleitung (21) mit der Ableitung (19) verbunden ist,
wobei ein zweiter Anschluss (23b) des 2-Wege-Ventils über einen zweiten Abschnitt (21b) der ersten Verbindungsleitung (21) mit dem Siphon oder Kondensatableiter (22) verbunden ist.

3. Wasserheizer (10) nach Anspruch 1, **dadurch gekennzeichnet, dass**
bei der ersten Alternative das mit der ersten Verbindungsleitung (21) zusammenwirkende Ventil (25) ein 3-Wege-Ventil ist,
wobei ein erster Anschluss (25a) des 3-Wege-Ventils über einen ersten Abschnitt (19a) der Ableitung (19) mit dem Wärmetauscher (17) verbunden ist,
wobei ein zweiter Anschluss (25b) des 3-Wege-Ventils über einen zweiten Abschnitt (19b) der Ableitung (19) mit dem zumindest einen Wasserverbraucher (24) verbunden ist,
wobei ein dritter Anschluss (25c) des 3-Wege-Ventils über die erste Verbindungsleitung (21) mit dem Siphon oder Kondensatableiter (22) verbunden ist.

4. Wasserheizer nach einem der Ansprüche 1 bis 3, **dadurch gekennzeichnet, dass**
der Gasbrenner (11) eine Brennerkammer (12) aufweist,
der Wärmetauscher (17) innerhalb der Brennerkammer (12) des Gasbrenners (11) positioniert ist,
der Siphon oder Kondensatableiter (22) außerhalb der Brennerkammer (12) des Gasbrenners (11) positioniert ist.

5. Verfahren zum Betreiben des Wasserheizers nach einem der Ansprüche 1 bis 4, **dadurch gekennzeichnet, dass,**
wenn kein Wärmebedarf vorliegt, nämlich wenn kein erwärmtes Wasser vom zumindest einen Wasserverbraucher (24) angefordert wird, der Gasbrenner (11) zur Kalibrierung des Gasbrenners (11) des Wasserheizers (10) bei einer festgelegten Brennerlast für ein festgelegtes Zeitintervall betrieben wird und das vom Wärmetauscher (17) während der Kalibrierung erwärmte Wasser zum Siphon oder Kondensatableiter (22) bereitgestellt wird.

6. Verfahren nach Anspruch 5, **dadurch gekennzeichnet, dass**
das während der Kalibrierung erwärmte Wasser über das Ventil (23, 25, 27) von der Ableitung (19) zum Siphon oder Kondensatableiter (22) bereitgestellt wird.

7. Verfahren zum Betreiben des Wasserheizers nach einem der Ansprüche 1 bis 4, vorzugsweise nach Anspruch 5 oder 6, **dadurch gekennzeichnet, dass,**
wenn kein Wärmebedarf vorliegt, nämlich wenn kein erwärmtes Wasser vom zumindest einen Wasserverbraucher (24) angefordert wird, nicht erwärmtes Wasser oder erwärmtes Wasser zum Füllen des Siphons oder Kondensatableiters (22) direkt nach Installation des Wasserheizers (10) zum Siphon oder Kondensatableiter (22) bereitgestellt wird.

8. Verfahren nach Anspruch 7, **dadurch gekennzeichnet, dass**
das nicht erwärmte Wasser oder das erwärmte Wasser über das Ventil (23, 25, 27) von der Ableitung (19) zum Siphon oder Kondensatableiter (22) bereitgestellt wird.

9. Verfahren zum Betreiben des Wasserheizers nach einem der Ansprüche 1 bis 6, vorzugsweise nach einem der Ansprüche 5 bis 8, **dadurch gekennzeichnet, dass,**
wenn kein Wärmebedarf vorliegt, nämlich wenn kein erwärmtes Wasser vom zumindest einen Wasserverbraucher (24) angefordert wird, nicht erwärmtes Wasser oder erwärmtes Wasser zum Reinigen des Siphons oder Kondensatableiters (22) zum Siphon oder Kondensatableiter (22) bereitgestellt wird.

10. Verfahren nach Anspruch 9, **dadurch gekennzeichnet, dass**
das nicht erwärmte Wasser oder das erwärmte Wasser über das Ventil (23, 25, 27) von der Ableitung (19) zum Siphon oder Kondensatableiter (22) bereitgestellt wird.

11. Verfahren zum Betreiben des Wasserheizers nach einem der Ansprüche 1 bis 4, vorzugsweise nach einem der Ansprüche 5 bis 10, **dadurch gekennzeichnet, dass,**
wenn kein Wärmebedarf vorliegt, nämlich wenn kein erwärmtes Wasser vom zumindest einen Wasserverbraucher (24) angefordert wird, die folgenden Schritte zum Entkalken des Wärmetauschers (17) abwechselnd ausgeführt werden:
i) Verbrennen von Gas mit dem Gasbrenner (11) bei einer festgelegten Brennerlast für ein festgelegtes erstes Zeitintervall und Bereitstellen des erwärmten Wassers zum Siphon oder Kondensatableiter (22),
ii) Stoppen der Verbrennung von Gas im Gasbrenner (11) für ein festgelegtes zweites Zeitintervall und Bereitstellen des nicht erwärmten Wassers zum Siphon oder Kondensatableiter (22).

12. Verfahren zum Betreiben des Wasserheizers nach einem der Ansprüche 1 bis 4, vorzugsweise nach einem der Ansprüche 5 bis 10, **dadurch gekennzeichnet, dass,**
wenn kein Wärmebedarf vorliegt, nämlich wenn kein erwärmtes Wasser vom zumindest einen Wasserverbraucher (24) angefordert wird, die folgenden Schritte zum Entkalken des Wärmetauschers (17) abwechselnd ausgeführt werden:
i) Verbrennen von Gas mit dem Gasbrenner (11) bei einer festgelegten ersten Brennerlast, vorzugsweise bei einer minimalen Brennerlast, für ein festgelegtes erstes Zeitintervall und Bereitstellen des erwärmten Wassers zum Siphon oder Kondensatableiter (22),
ii) Verbrennen von Gas mit dem Gasbrenner (11) bei einer festgelegten zweiten Brennerlast, vorzugsweise bei einer maximalen Brennerlast, für ein festgelegtes zweites Zeitintervall und Bereitstellen des erwärmten Wassers zum Siphon oder Kondensatableiter (22), wobei die erste Brennerlast im Vergleich zur zweiten Brennerlast relativ niedrig ist.

13. Verfahren nach Anspruch 11 oder 12, **dadurch gekennzeichnet, dass**
während des ersten Zeitintervalls und während des zweiten Zeitintervalls das Wasser über das Ventil (23) von der Ableitung (19) zum Siphon oder Kondensatableiter (22) bereitgestellt wird.

## Revendications

1. Chauffe-eau (10), comprenant :
un brûleur à gaz (11) configuré pour effectuer la combustion d'un gaz si une demande de chaleur est présente, à savoir si de l'eau chauffée est demandée par au moins un consommateur d'eau (24),
un échangeur de chaleur (17) configuré pour chauffer de l'eau en utilisant l'énergie thermique fournie avec la combustion du gaz, dans lequel l'échangeur de chaleur (17) est un échangeur de chaleur à condensation,
un tuyau d'entrée (18) configuré pour fournir de l'eau destinée à être chauffée à l'échangeur de chaleur (17),
un tuyau de sortie (19) configuré pour fournir de l'eau chauffée par l'échangeur de chaleur (17) à l'au moins un consommateur d'eau (24),
un siphon ou un purgeur (22) configuré pour collecter un condensat résultant à l'échangeur de chaleur à condensation (17) durant le fonctionnement du chauffe-eau (10),
un premier tuyau de raccordement (21) et une vanne (23, 25, 27) agissant conjointement avec le premier tuyau de raccordement (21), le premier tuyau de raccordement (21) et la vanne (23, 25, 27) étant tous les deux configurés pour
guider de l'eau chauffée par l'échangeur de chaleur (17) depuis le tuyau de sortie (19) jusqu'au siphon ou au purgeur (22), et/ou
guider de l'eau non chauffée par l'échangeur de chaleur (17) depuis le tuyau de sortie (19) jusqu'au siphon ou au purgeur (22),
**caractérisé par**
un second tuyau de raccordement (20) s'étendant entre le tuyau d'entrée (18) et le tuyau de sortie (19), dans lequel, dans une première possibilité,
une vanne distincte (26) agit conjointement avec le second tuyau de raccordement (20), configurée pour guider de l'eau depuis le tuyau d'entrée (18) jusqu'au tuyau de sortie (19), ou dans lequel, dans une seconde possibilité,
le premier tuyau de raccordement (21) s'étend entre le second tuyau de raccordement (20) et le siphon ou le purgeur (22), la vanne (27) agissant conjointement avec le premier tuyau de raccordement (21) est fournie par une vanne à 3 voies, est raccordée entre le premier tuyau de raccordement (21) et le second tuyau de raccordement (20) et agit également conjointement avec le second tuyau de raccordement (20), un premier orifice (27a) de la vanne à 3 voies est raccordé au tuyau de sortie (19) par l'intermédiaire d'une première section (20a) du second tuyau de raccordement (20), un deuxième orifice (27b) de la vanne à 3 voies est raccordé au tuyau d'entrée (18) par l'intermédiaire d'une seconde section (10b) du second tuyau de raccordement (20), et un troisième orifice (27c) de la vanne à 3 voies est raccordé au siphon ou au purgeur (22) par l'intermédiaire du premier tuyau de raccordement (21).

2. Chauffe-eau (10) de la revendication 1, **caractérisé en ce que**,
dans la première possibilité,
la vanne (23) agissant conjointement avec le premier tuyau de raccordement (21) est une vanne à 2 voies positionnée à l'intérieur du premier tuyau de raccordement (21),
dans lequel un premier orifice (23a) de la vanne à 2 voies est raccordée au tuyau de sortie (19) par l'intermédiaire d'une première section (21a) du premier tuyau de raccordement (21),
dans lequel un second orifice (23b) de la vanne à 2 voies est raccordée au siphon ou au purgeur (22) par l'intermédiaire d'une seconde section (21b) du premier tuyau de raccordement (21).

3. Chauffe-eau (10) de la revendication 1, **caractérisé en ce que**
dans la première possibilité,
la vanne (25) agissant conjointement avec le premier tuyau de raccordement (21) est une vanne à 3 voies,
dans lequel un premier orifice (25a) de la vanne à 3 voies est raccordé à l'échangeur de chaleur (17) par l'intermédiaire d'une première section (19a) du tuyau de sortie (19),
dans lequel un deuxième orifice (25b) de la vanne à 3 voies est raccordé à l'au moins un consommateur d'eau (24) par l'intermédiaire d'une seconde section (19b) du tuyau de sortie (19),
dans lequel un troisième orifice (25c) de la vanne à 3 voies est raccordé au siphon ou au purgeur (22) par l'intermédiaire du premier tuyau de raccordement (21).

4. Chauffe-eau de l'une des revendications 1 à 3, **caractérisé en ce que**
le brûleur à gaz (11) comprend une chambre de brûleur (12),
l'échangeur de chaleur (17) est positionné à l'intérieur de la chambre de brûleur (12) du brûleur à gaz (11),
le siphon ou le purgeur (22) est positionné à l'extérieur de la chambre de brûleur (12) du brûleur à gaz (11).

5. Procédé de fonctionnement du chauffe-eau de l'une des revendications 1 à 4, **caractérisé en ce que**
si aucune demande de chaleur n'est présente, à savoir si de l'eau chauffée n'est pas demandée par l'au moins un consommateur d'eau (24), pour un étalonnage du brûleur à gaz (11) du chauffe-eau (10), le brûleur à gaz (11) est mis en fonctionnement à une charge de brûleur définie pendant un intervalle de temps défini et l'eau chauffée par l'échangeur de chaleur (17) durant l'étalonnage est fournie au siphon ou au purgeur (22).

6. Procédé de la revendication 5, **caractérisé en ce que**
l'eau chauffée durant l'étalonnage est fournie, depuis le tuyau de sortie (19), au siphon ou au purgeur (22), par l'intermédiaire de la vanne (23, 25, 27).

7. Procédé pour faire fonctionner le chauffe-eau de l'une des revendications 1 à 4, de préférence selon la revendication 5 ou 6, **caractérisé en ce que**
si aucune demande de chaleur n'est présente, à savoir si de l'eau chauffée n'est pas demandée par l'au moins un consommateur d'eau (24), pour un remplissage du siphon ou du purgeur (22) directement après l'installation du chauffe-eau (10), de l'eau non chauffée ou de l'eau chauffée est fournie au siphon ou au purgeur (22).

8. Procédé de la revendication 7, **caractérisé en ce que**
l'eau non chauffée ou l'eau chauffée est fournie, depuis le tuyau de sortie (19), au siphon ou au purgeur (22), par l'intermédiaire de la vanne (23, 25, 27).

9. Procédé pour faire fonctionner le chauffe-eau de l'une des revendications 1 à 6, de préférence selon l'une des revendications 5 à 8, **caractérisé en ce que**
si aucune demande de chaleur n'est présente, à savoir si de l'eau chauffée n'est pas demandée par l'au moins un consommateur d'eau (24), pour un nettoyage du siphon ou du purgeur (22), de l'eau non chauffée ou de l'eau chauffée est fournie au siphon ou au purgeur (22).

10. Procédé de la revendication 9, **caractérisé en ce que**
l'eau non chauffée ou l'eau chauffée est fournie, depuis le tuyau de sortie (19), au siphon ou au purgeur (22), par l'intermédiaire de la vanne (23, 25, 27).

11. Procédé pour faire fonctionner le chauffe-eau de l'une des revendications 1 à 4, de préférence selon l'une des revendications 5 à 10, **caractérisé en ce que**
si aucune demande de chaleur n'est présente, à savoir si de l'eau chauffée n'est pas demandée par l'au moins un consommateur d'eau (24), pour un détartrage de l'échangeur de chaleur (17) les étapes suivantes sont exécutées de façon alternée :
i) effectuer la combustion de gaz avec le brûleur à gaz (11) à une charge de brûleur définie pendant un premier intervalle de temps défini, et fournir l'eau chauffée au siphon ou au purgeur (22),
ii) arrêter la combustion de gaz à l'intérieur du brûleur à gaz (11) pendant un second intervalle de temps défini, et fournir l'eau non chauffée au siphon ou au purgeur (22).

12. Procédé pour faire fonctionner le chauffe-eau de l'une des revendications 1 à 4, de préférence selon l'une des revendications 5 à 10, **caractérisé en ce que**
si aucune demande de chaleur n'est présente, à savoir si de l'eau chauffée n'est pas demandée par l'au moins un consommateur d'eau (24), pour un détartrage de l'échangeur de chaleur (17) les étapes suivantes sont exécutées de façon alternée :
i) effectuer la combustion de gaz avec le brûleur à gaz (11) à une première charge de brûleur définie, de préférence à une charge de brûleur minimum, pendant un premier intervalle de temps défini, et fournir l'eau chauffée au siphon ou au purgeur (22),
ii) effectuer la combustion de gaz avec le brûleur à gaz (11) à une seconde charge de brûleur définie, de préférence à une charge de brûleur maximum, pendant un second intervalle de temps défini, et fournir l'eau chauffée au siphon ou au purgeur (22), dans lequel la première charge de brûleur est relativement basse relativement à la seconde charge de brûleur.

13. Procédé de la revendication 11 ou 12, **caractérisé en ce que**
durant le premier intervalle de temps et durant le second intervalle de temps, l'eau est fournie, depuis le tuyau de sortie (19), au siphon ou au purgeur (22), par l'intermédiaire de la vanne (23).
